# EUROPÄISCHE PATENTSCHRIFT

(11) **EP 1 943 441 B1**
(45) Veröffentlichungstag und Bekanntmachung des Hinweises auf die Patenterteilung: **04.08.2010**
(21) Anmeldenummer: 06804840.4
(22) Anmeldetag: 30.10.2006
(51) Int. Cl.: F16H 35/00, G05G 5/04, F16K 31/53

(54) **STELLANTRIEB MIT EINEM REDUKTIONSGETRIEBE FÜR EIN STELLGLIED ZUR REGELUNG EINES GAS- ODER FLÜSSIGKEITSSTROMS**
ACTUATOR WITH A REDUCTION GEAR PROVIDED FOR AN ACTUATING ELEMENT FOR REGULATE A GAS OR FLUID FLOW
ACTIVATEUR COMPRENANT UN MECANISME DE REDUCTION POUR UN ELEMENT D'ACTIVATION PERMETTANT DE REGULER LE DEBIT D'UN GAZ OU D'UN FLUIDE

(30) Priorität: 03.11.2005 CH 17622005
(43) Veröffentlichungstag der Anmeldung: 16.07.2008
(73) Patentinhaber: Belimo Holding AG, 8340 Hinwil (CH)
(72) Erfinder: WINTSCH, Christoph, CH-8303 Bassersdorf (CH); WEBER, Beat, CH-8050 Zürich (CH); FIORUCCI, Mario, CH-8046 Zürich (CH); FURRER, Andi, CH-8620 Wetzikon (CH)
(74) Vertreter: Roshardt, Werner Alfred
(86) Internationale Anmeldenummer: PCT/CH2006/000606
(87) Internationale Veröffentlichungsnummer: WO 2007/051332

(56) Entgegenhaltungen:
- CH-A5- 614 507
- CH-A5- 623 672
- FR-A- 2 584 850
- US-A- 1 339 052
- US-A- 3 434 356
- US-A- 3 762 523
- US-A- 5 657 664

## Beschreibung

Die Erfindung bezieht sich auf einen Stellantrieb mit einem auch vorgespannten Reduktionsgetriebe, welcher über ein Antriebsorgan, insbesondere in Form eines Antriebssegments, eines Linearantriebs oder einer Antriebsspindel, auf ein Stellglied zur Regelung eines Gas- oder Flüssigkeitsstroms einwirkt, insbesondere auf dem Gebiet HLK, Brand- und Rauchschutz, wobei die Stellbewegung durch Endanschläge begrenzt ist.

Elektrisch betätigte Stellantriebe für die Motorisierung von Stellgliedern in Heizungs-, Lüftungs- und Klimaanlagen (HLK-Anlagen) werden seit mehr als 30 Jahren hergestellt. HLK-Stellglieder gewährleisten eine wirtschaftliche Volumenstromregelung von Gasen oder Flüssigkeiten, insbesondere von Luft und Wasser. Als kompakte Einheit umfassen sie zweckmässig nicht nur den Antrieb, sondern auch Druckfühler und Regler, alles in einem Gerät vereint.

Belüftungssysteme werden zunehmend in Gebäuden, insbesondere Wohn-, Büro-, Gewerbe- und Industriebauten, eingesetzt, in der Regel kombiniert mit Brand- und Rauchschutzeinrichtungen. Beispielsweise in Belüftungsanlagen spielt die Volumenstromregelung mit schwenkbaren Luftklappen eine wesentliche Rolle, in Wasser und Abwasseranlagen der Antrieb von Ventilen mit einem Drehmoment oder einer Linearbewegung. Der Volumenstrom wird mit einem geeigneten Messinstrument gemessen, beispielsweise mit dem als kompakte Einheit von Antrieb, Druckfühler und Regler ausgebildeten NMV-D2M der Belimo Automation AG, CH-8340 Hinwil, und die Messwerte an eine Elektronik weitergegeben.

Zum Bewegen einer Klappe in einem Belüftungssystem oder eines Ventils in einem Wasserleitungssystem betätigen verhältnismässig schwache Motoren grossflächige oder grossvolumige Regelorgane. Eine präzise und stabile Verstellung ist nur mit einem sehr starken Reduktionsgetriebe möglich. Für die Betätigung des Stellantriebs sind zahlreiche Umdrehungen der Welle eines Elektromotors notwendig. Die Elektronik erarbeitet die Steuersignale und steuert den Elektromotor an.

In der CH 614507 A5 wird ein Stellantrieb mit einem Elektromotor und einem Reduktionsgetriebe für eine Belüftungsanlage beschrieben. Er ist auf eine Klappen- bzw. Ventilachse aufsteckbar. Das letzte gezahnte Getriebeelement, vorliegend Antriebsorgan genannt, ist als Zahnsegment ausgebildet und mit einer axial gehalterten Hohlwelle versehen. Der Elektromotor kann nach dem Erreichen von Endanschlägen, welche den Drehwinkel des gezahnten Antriebssegments beschränken, eingeschaltet bleiben. Der beschriebene Stellantrieb findet Verwendung bei Luftklappen, Mischhähnen und Drosselklappen in Heizungs- und Lüftungsanlagen. Das beschriebene Reduktionsgetriebe ist apparatespezifisch ausgebildet. Das Dokument CH 614 507 A5 zeist alle Merkmale des Oberbegriffes von Anspruch 1.

In der WO 2005/090831 A1 ist ein modular aufgebautes Reduktionsgetriebe beschrieben, welches ein Primärgetriebe mit wenigstens einem Antriebsmotor und ein Sekundärgetriebe mit einem Antrieb umfasst. Die beiden Getriebemodule sind lösbar miteinander verbunden. Durch den modularen Aufbau des Reduktionsgetriebes aus Primärgetriebe und Sekundärgetriebe kann bei geringer Baugruppenanzahl eine hohe Gerätevielfalt erzielt werden.

Für den Sicherheitsvorschriften entsprechende Systeme mit Lüftungsklappen oder Ventilen werden in vielen Fällen durch Federantrieb vorgespannte Reduktionsgetriebe eingesetzt. Bei einem Stromausfall oder einem anderweitigen Defekt fährt die gespeicherte Federenergie die Lüftungsklappe oder das Ventil in eine definierte Sicherheitsposition. Aufgrund des festgelegten Wirksinnes der vorgespannten internen Feder sind die Antriebe in der Regel symmetrisch aufgebaut. Bei der Montage des Stellantriebs wird festgelegt, in welche Richtung er bei Stromausfall fahren soll, indem der Stellantrieb beispielsweise um 180° gedreht wird. Durch die symmetrische Bauweise des Stellantriebs bedingt müssen Bedienelemente, wie z.B. ein Schalter, immer von beiden Seiten des Stellantriebs zugänglich sein. Dies kann unter Verwendung eines mechanischen Umschaltmechanismus' umgangen werden, weil in diesem Fall der Antrieb einseitig aufgebaut und bedient werden kann. Dies wird beispielsweise in der nachfolgenden Publikation realisiert.

Die US 5,657,664 beschreibt ein Getriebe für einen mit Federrücklauf ausgerüsteten Stellantrieb. Es wird mit zwei Antriebssegmenten gearbeitet. In einem Ringspalt zwischen der Antriebswelle und zwei auf derselben Drehachse angeordneten Rädern ist eine Kupplungshülse angeordnet, welche mit der Antriebswelle lösbar verbunden ist. Durch den Austausch der Kupplungshülse ist die Drehrichtung der Antriebswelle veränderbar. Nachteilig ist, wie erwähnt, die Ausbildung von zwei Antriebssegmenten.

Die US 3,434,356 beschreibt eine Vorrichtung zur Limitierung der Drehbewegung einer Antriebswelle, welche einen Servomechanismus, ein Synchrosystem, ein Potentiometer oder ein ähnliches elektrisches Gerät antreibt. Auf einer gemeinsamen Steuerachse, welche mit der Antriebswelle verbunden ist, sind dabei mehrere Mitnehmerscheiben mit seitlich abstehenden und axial überlappenden Vorständen nebeneinander angebracht. Solange die Steuerachse frei drehbar ist, wird eine Drehbewegung des Antriebs auf die Antriebswelle übertragen. Bei einer Drehung der Steuerachse macht die erste Mitnehmerscheibe nahezu eine vollständige Umdrehung, bis sie die zweite Mitnehmerscheibe über die seitlichen Vorstände mitbewegt. Nach einer weiteren fast vollständigen Umdrehung wird eine dritte Mitnehmerscheibe in analoger Weise mitbewegt, bis diese an einem gehäuseseitigen Anschlag blockiert und dadurch eine weitere Rotation der Steuerwelle bzw. der Antriebswelle verhindert. In dieser Stellung wird die Antriebswelle mechanisch über eine kupplungsähnliche Vorrichtung ("bidirectional shaftlock") vom Antrieb getrennt. Zudem wird die Steuerachse in dieser Position durch eine Steuerscheibe blockiert, welche durch eine Aussetzerregelung ("intermittent drive") gesteuert wird.

Der vorliegenden Erfindung liegt die Aufgabe zugrunde, Stellantriebe der eingangs genannten Art zu schaffen, welche ein verbessertes Konzept für die inneren Endanschläge des Antriebs und/oder der Änderung der Bewegungsrichtung des Antriebsorgans beinhalten.

Die Aufgabe wird nach einer ersten Ausführungsform erfindungsgemäss dadurch gelöst, dass wenigstens ein gehäuseseitiger, innerer Endanschlag die Rotationsfreiheit eines mit dem Antriebsorgan in formschlüssigem Eingriff stehenden Anschlagrads auf mehr als eine volle Umdrehung begrenzt. Spezielle und weiterbildende Ausführungsformen des Endanschlags sind Gegenstand von abhängigen Patentansprüchen.

Nach allen bekannten Ausführungsformen sind zwei Endanschläge für das Antriebsorgan, insbesondere für ein gezahntes Antriebssegment, angeordnet. Die erfindungsgemässe Lösung erlaubt in der Ruhestellung das lastfreie Umschalten der Drehrichtung, auch wenn das Reduktionsgetriebe bereits vorgespannt ist. Für ein korrektes Funktionieren eines Federrücklaufantriebs sind innere Anschläge von erheblicher Bedeutung:
- Am unteren Ende des Arbeitsbereichs, um eine vorgegebene minimale Federvorspannung halten zu können.
- Am oberen Ende des Arbeitsbereichs, um diesen einzugrenzen.

Die im Bereich des Anschlagrads von den Endanschlägen aufzunehmenden Kräfte sind dank der geringeren Untersetzung kleiner als die bisher vom Antriebsorgan, insbesondere von einem gezahnten Antriebssegment, aufzunehmenden Kräfte. Die Endanschläge können deshalb kleiner und schwächer dimensioniert werden.

Die Beschränkung der Drehfreiheit des Anschlagrads mit wenigstens einem gehäuseseitigen, inneren Endanschlag kann auf verschiedenste Arten erreicht werden, von denen einige näher erläutert werden.

Eine bei mehr als 360° liegende, jedoch beschränkte Drehbarkeit des Anschlagrads wird mit der Anordnung von wenigstens einem frei drehbaren, zum Antriebsrad koaxialen Schleppring erreicht. Mit einem Schleppring können nahezu zwei volle Umdrehungen des Anschlagrads erreicht werden. Die volle Bewegungsfreiheit von 720° wird lediglich durch die Breite eines Endanschlags und eines Übertragungsnockens des Schlepprings gemindert. Es können mehrere koaxial zum Anschlagrad ineinander und/oder übereinander liegende Schleppringe angeordnet sein, welche je einen inneren und/oder äusseren bzw. unteren und/oder oberen Übertragungsnocken in radialer Richtung angeordnet ist. Bei n Schleppringen kann das Anschlagrad n+1 freie Umdrehungen, jeweils vermindert um die erwähnte Breite des Endanschlags und n Übertragungsnocken ausführen, wobei n eine positive ganze Zahl >0 ist.

Nach einer ersten Variante mit Schleppringen weist das Gehäuse des Untersetzungsgetriebes eine zur Welle des Anschlagrads koaxiale becherförmige Aussparung mit einem radial nach innen abkragenden Anschlagnocken auf, welcher für den äusseren Übertragungsnocken eines einzigen Schlepprings oder des äussersten von mehreren Schleppringen als Endanschlag dient. In der Aussparung ist wenigstens ein Schleppring mit je einem radial nach aussen und innen abkragenden Übertragungsnocken und ein Stirnrad des Anschlagrads mit einem radial nach aussen abkragenden Mitnehmernocken für den inneren Übertragungsnocken eines einzigen Schlepprings oder des innersten von mehreren Schleppringen angeordnet. Bei mehreren Schleppringen schlägt der jeweils äussere Übertragungsnocken auf den jeweils inneren Übertragungsnocken des nächst grösseren Schlepprings auf und überträgt so das Drehmoment, bis das Anschlagrad die Grenze der freien Drehbarkeit erreicht hat. Wie erwähnt können mehrere Schleppringe auch übereinander angeordnet sein.

Nach einer zweiten Variante mit Schleppringen weist das Anschlagrad eine stirnseitige, koaxiale, becherförmige Aussparung mit einem radial nach innen abkragenden Mitnehmernocken auf. In der Öffnung ist wenigstens ein Schleppring mit je einem radial nach aussen und innen bzw. unten und oben abkragenden Übertragungsnocken und ein koaxialer, starr am Gehäuse befestigtes Rohr oder ein entsprechender Bolzen mit einem nach aussen abkragenden Endanschlag für den inneren Übertragungsnocken des oder des innersten Schlepprings aufweist, wobei bei mehreren Schleppringen der jeweils innere Übertragungsnocken auf den jeweils äusseren Übertragungsnocken des nächst kleineren Schlepprings aufschlägt. Auch nach dieser Variante können mehrere Schleppringe ineinander und/oder übereinander angeordnet sein.

In den beiden vorhergehenden Abschnitten sind zwei inverse Lösungen beschrieben, wobei der Antrieb nach der ersten Variante grundsätzlich von innen nach aussen, nach der zweiten Variante von aussen nach innen erfolgt.

Nach einer dritten Variante mit Schleppringen weist das Anschlagrad wiederum eine stirnseitige, koaxiale, becherförmige Aussparung mit einem radial nach innen abkragenden Mitnehmernocken auf. In der Öffnung ist ein Schleppring mit einem radial nach aussen abkragenden Übertragungsnocken für den Mitnehmernocken und ein aussenseitig des Schlepprings angeordneter gehäusefester Anschlagnocken für den Übertragungsnocken angeordnet. Der Mitnehmernocken des Anschlagrads ist mit Spiel über den gehäusefesten Anschlagnocken drehbar. Mit anderen Worten ist die Innenfläche des Mitnehmernockens etwas weiter von der Drehachse des Anschlagrads entfernt als die Aussenfläche des gehäuseseitigen Anschlagnockens, welcher als Endanschlag dient.

In der Zeichnungsbeschreibung werden auch praktische Realisierungsmöglichkeiten für die Begrenzung der freien Drehbarkeit des Anschlagrades ohne Schleppringe aufgezeigt, nämlich mittels einer scheibenförmigen Anschlagkulisse mit Spiralführung, einer Zahnstange und einem Spindelrad. Das Anschlagrad kämmt z. B. mit einem frei drehbaren Spindelrad, welches über eine Führungshülse mit Innengewinde auf eine längsverschiebbare, drehgesicherte Spindel einwirkt, welche beidseits einen Endanschlag aufweist, die die Anzahl Umdrehungen des Anschlagrads begrenzen.

Wie bereits erwähnt, ist das Reduktions- bzw. Untersetzungsgetriebe eines Stellantriebs vorzugsweise vorgespannt, dies erfolgt vorzugsweise durch ein mit dem Ritzel des Anschlagrads in formschlüssigem Eingriff stehenden, d.h. mit dem Ritzel des Anschlagrads kämmenden Federrad. Zweckmässig wird eine Spiralfeder verwendet, welche beispielsweise aus einem Federstahlflachband besteht.

Nach einer weiteren Variante ist in einem verwendungsspezifisch ausgebildeten Gehäuse ein vorgespanntes Reduktionsgetriebe angeordnet, welches modular aufgebaut und mit dem Anschlagrad als Schnittstelle zum Antriebsorgan auswechselbar ist. Wie bereits erwähnt, ist das gezahnte Antriebsorgan insbesondere ein Antriebssegment, ein Linearantrieb oder eine Antriebsspindel. Für spezielle Ausführungsformen solcher Module, welche auch aufsteckbar ausgebildet sind, wird auf die WO 2005/090831 A1 verwiesen.

Aufsteckmodule mit einer Schnittstelle im Bereich zwischen dem Anschlagrad und dem Antriebsorgan haben vorzugsweise eine Umschaltvorrichtung zum Ändern der Bewegungsrichtung des einzigen Antriebsorgans. Wenigstens ein innerer Endanschlag ist im Modul angeordnet, welches vorgespannt aufgesteckt und zweckmässig angeschnappt werden kann.

Die Aufgabe der Erfindung wird bezüglich eines vorgespannten Stellantriebs nach einer weiteren Ausführungsform auch dadurch gelöst, dass eine Umschaltvorrichtung zum Ändern der Bewegungsrichtung des Antriebsorgans zwei in Gegenrichtung antreibbare Stirnzahnräder mit gleichem Durchmesser je ein in deren Axialrichtung verschiebbares Schaltritzel haben, die in jeder axialen Position mit dem Antriebsorgan in formschlüssigem Eingriff stehen, wobei jeweils eines der beiden Schaltritzel mit einem der beiden Stirnzahnräder gleichen Durchmessers drehmomentfest verrastbar ist. Spezielle und weiterbildende Ausführungsformen des Stellantriebs mit der Umschaltvorrichtung sind Gegenstand von abhängigen Patentansprüchen.

Vorzugsweise ist aus den beiden Stirnzahnrädern gleichen Durchmessers eine koaxiale Aussparung mit der Querschnittsform der Schaltritzel ausgebildet. Das eine der beiden Stirnzahnräder hat bevorzugt einen kleineren Durchmesser als das Anschlagrad, ist einstückig mit diesem ausgebildet oder fest mit diesem verbunden, das andere Stirnzahnrad ist ein Zwischenrad. Die beiden Stirnzahnräder drehen mit gleicher Winkelgeschwindigkeit in entgegengesetzter Richtung. Je nachdem, welches Schaltritzel abgesenkt ist und in formschlüssigem Eingriff mit dem betreffenden Stirnzahnrad steht, wird das Antriebsorgan in der einen oder anderen Richtung bewegt.

Die beiden Schaltritzel, welche in jeder Position mit dem gezahnten Antriebsorgan für das Stellglied kämmen, sind zweckmässig in deren axialer Richtung vorgespannt, insbesondere mit einer Blattfeder oder einer spiralförmigen Druckfeder. Eine entlang der Zahnung des Antriebsorgans verlaufende Schaltkulisse führt die beiden Schaltritzel, welche durch die Vorspannkraft der Feder an die Schaltkulisse gedrückt werden.

Die Schaltkulisse hat je eine endständige, dem Durchmesser der Schaltritzel oder deren Flansch im oberen Stirnbereich entsprechende Aussparungen. In dieser Endposition wird ein vorgespanntes Schaltritzel in die vorgesehene Aussparung im betreffenden Zahnrad gedrückt, und das aus der Endposition geschwenkte Antriebsorgan vom nunmehr durch den Formschluss mitgenommenen Schaltritzel bewegt. Das zweite Schaltritzel verbleibt ohne Antrieb, dreht jedoch frei laufend mit.

In der erwähnten endständigen Position des Antriebsorgans kann das Schaltritzel, entgegen der Andruckkraft der Feder, wieder angehoben und durch Schwenken des Antriebsorgans vorgespannt auf die Schaltkulisse geschoben werden.

Bei einem gleichzeitigen Formschluss der beiden Schaltritzel mit den gegenläufig drehenden Stirnzahnrädern würde das Getriebe blockieren. Diese Situation wird deshalb vermieden oder mit geeigneten Mittel verunmöglicht.

Die Schaltritzel des Stellantriebs können einen zweckmässig überstehenden Flansch aufweisen.

Die Schaltkulisse kann endständige, dem Durchmesser der Schaltritzel oder deren Flansche entsprechende Aussparungen zum Einrasten der betreffenden vorgespannten Schaltritzel aufweisen.

Das Anschlagrad oder das Zwischenrad ist z.B. für einen gehäuseseitigen Endanschlag ausgebildet, wobei die Rotationsfreiheit des betreffenden Rades auf mehr als eine volle Umdrehung begrenzt ist.

Nach einer besonders vorteilhaften Ausführungsform weist der erfindungsgemässe Stellantrieb mit einer Umschaltvorrichtung zum Ändern der Bewegungsrichtung des Antriebsorgans einen wenigstens gehäuseseitigen Endanschlag im Bereich von einem der beiden gegenseitig drehenden Stirnzahnrädern gleichen Durchmessers auf. Die Rotationsfreiheit des betreffenden Stirnzahnrades, in der Regel des Anschlagrads, ist auf mehr als eine volle Umdrehung um 360° begrenzt.

In allen vorstehend beschriebenen Ausführungsformen ist der Stellantrieb zweckmässig in Form eines Moduls ohne Antriebsorgan, d.h. ohne gezahntes Antriebssegment, Linearantrieb oder Antriebsspindel, vormontiert und vorgespannt. Dieses Modul ist in einem verwendungsspezifischen Gehäuse angeordnet und kann auch zusammen mit einem Antriebsorgan auf einer gemeinsamen Montageplatte aufgebracht sein.

Die Vorteile der Erfindung können wie folgt zusammengefasst werden:

Wenigstens ein gehäuseseitiger, innerer Endanschlag vereinfacht den Einbau eines Schaltgetriebes zur Wahl der Federrücklaufrichtung mit einseitigem Aufbau wesentlich, insbesondere in Modulbauweise. Der Antrieb muss nicht um 180° seiner Längsachse gedreht werden, um die Federrücklaufrichtung festzulegen. Dank dieser Lösung müssen die Bedienungselemente nicht von beiden Seiten des Antriebs zugänglich sein. Eine als Modul ausgebildete Reduktionsgetriebeeinheit kann vom Motor bis zum Anschlagrad vormontiert und vorgespannt werden. Das Antriebsorgan kann applikationsspezifisch gewählt werden, insbesondere als Antriebssegment, als Zahnstange ausgebildeter Linearantrieb oder als Antriebsspindel. Die axiale Schaltbewegung mit der Schaltkulisse und den Schaltritzeln funktioniert zuverlässig und benötigt nur kleine Schaltwege. Im Fall eines Antriebssegments kann der Segmentwinkel deutlich unter 180° liegen, es ist nur ein einziges Segment notwendig.

Der Benutzer erhält einen vorgespannten Stellantrieb mit Drehrichtungswahl mit einem Antriebsorgan in Mittelstellung oder führt das Antriebsorgan vor dem Aufstehen eines Stellantriebmoduls in diese Stellung. Das beispielsweise segmentförmige Antriebsorgan ist innerhalb der Endpositionen frei drehbar. Dann wird das Antriebsorgan manuell in die linke oder rechte Endposition geführt, wo ein vorgespanntes Stellritzel verrastet. Bei einer falschen Drehrichtungswahl kann das verrastete Stellritzel in der Endposition mit einer Rückstelltaste entkoppelt und das andere Stellritzel in der anderen Endposition des Antriebsorgans verrastet werden.

Die Erfindung wird anhand von in der Zeichnung dargestellten Ausführungsbeispielen, welche auch Gegenstand von abhängigen Patentansprüchen sind, näher erläutert. Es zeigen schematisch
- - Fig. 1: eine perspektivische Ansicht eines Stellantriebs, von unten, mit einem Antriebssegment,
- - Fig. 2: den Stellantrieb gemäss Fig. 1, von oben,
- - Fig. 3: eine perspektivische Ansicht einer Zahnstange mit End- anschlägen,
- - Fig.4: eine perspektivische Ansicht eines Spindelrads mit End- anschlägen,
- - Fig. 5: einen Querschnitt eines inneren Anschlags im Bereich eines Anschlagrads, mit einem Schleppring,
- - Fig. 6: eine Variante von Fig. 5,
- - Fig. 7: eine weitere Variante von Fig. 5, in Draufsicht,
- - Fig. 8: eine Variante von Fig. 7, mit zwei Schleppringen, in perspektivischer Ansicht,
- - Fig. 9: das Grundprinzip einer Drehrichtungswahl,
- - Fig. 10: eine Schaltkulisse mit einem axial verschiebbaren Schaltritzel, in nicht angetriebener Stellung,
- - Fig. 11: ein eingerastetes Schaltritzel gemäss Fig. 10, in Arbeits- stellung,
- - Fig. 12: einen Schaltmechanismus für eine Drehrichtungswahl, und
- - Fig. 13: eine perspektivische Ansicht eines Anschlagrads mit einer Aufschlagkulisse.

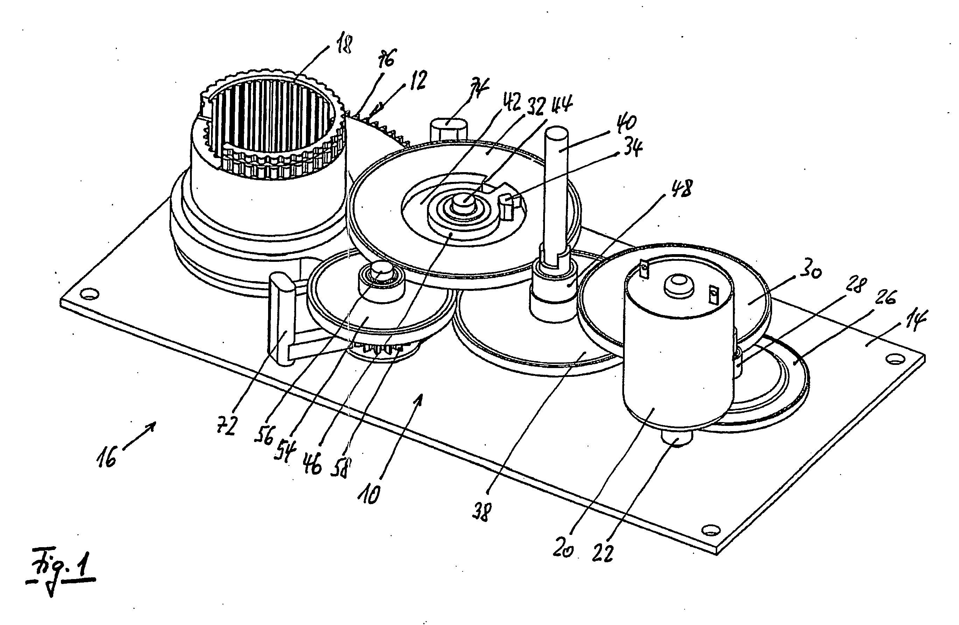

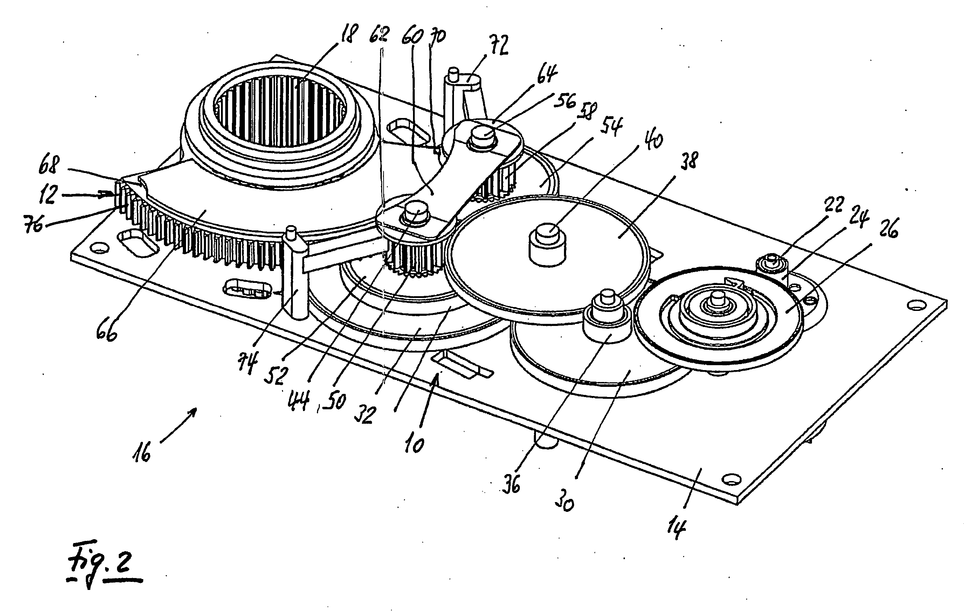

Fig. 1 und 2 zeigen ein Reduktions- bzw. Untersetzungsgetriebe 10 mit einem gezahnten Antriebsorgan 12, welche auf einer Montageplatte 14 angeordnet sind und einen Stellantrieb 16 bilden, der auf ein nicht dargestelltes Stellglied zur Regelung eines Gas- oder Flüssigkeitsstrom einwirkt. Das segmentförmige Antriebsorgan 12 ist kraft- und/oder formschlüssig mit einer Hohlwelle 18 verbunden, welche beispielsweise eine LHK-Klappe bis zu einem Anschlag oder um einen bestimmten Winkel schwenkt. Die Hohlwelle 18 ist schwenkbar in der Montageplatte 14 gehaltert. Offensichtlich kann das segmentförmige Antriebsorgan 12 nach einer nicht dargestellten Variante auch als ganzes Stirnrad ausgebildet sein.

Das Reduktionsgetriebe 10 ist von einem stufenlosen regelbaren Elektromotor 20 angetrieben, wobei dessen Antriebswelle 22 mit einem Ritzel 24 für eine kleine Bewegung des Antriebsorgans 12 eine grosse Zahl von den Umdrehungen vollführt. Die grosse Untersetzung erlaubt die Erzeugung einer verhältnismässig grossen Anstellkraft mit einem leistungsschwachen Elektromotor 20 und überdies die genaue Einstellung der Bewegungen des Antriebsorgans 12. Ein Rücklaufantrieb des Elektromotors 20 ist vorliegend nicht notwendig, weil eine später im Detail beschriebene Drehrichtungswahl für das Antriebsorgan 12 vorgesehen ist. Mit anderen Worten kann die Bewegungsrichtung des Antriebsorgans 12 bei gleichem Drehsinn des Elektromotors 20 geändert werden. Bei nicht dargestellten Varianten eines Reduktionsgetriebes ohne Drehrichtungswahl und ohne Vorspannung des Reduktionsgetriebes ist ein Vor- und Rücklaufantrieb des Elektromotors 20 notwendig.

Das Ritzel 24 des Elektromotors 20 kämmt mit einem ersten Doppelstimrad 26, dessen Ritzel 28 kämmt seinerseits mit einem zweiten Doppelstimrad 30. Nach nicht dargestellten Ausführungsformen können noch weitere analoge Doppelstimräder in das Reduktionsgetriebe 10 eingebaut sein. Wie aus Fig. 2 ersichtlich, kann jedes dieser Doppelstirnräder 26, 28, .... strukturell als Anschlagrad 32 ausgebildet sein, jedoch ohne dessen nachfolgend beschriebene Funktion zu übernehmen.

Das Ritzel 36 des zweiten Doppelstirnrads 30 kämmt mit einem Federrad 38, das einen axial nach oben abkragenden Welle 40 hat. Der Übersichtlichkeit wegen ist die spiralförmig aufgebrachte Feder aus einem Federstahlband nicht gezeichnet. Diese hat eine hinreichende Federkraft, um bei einem Motorausfall das ganze System, beispielsweise eine Klappe in einem Belüftungssystem, von der Arbeitsposition in die Ruheposition, d.h. die Schliessposition, zurückzubringen.

Das Ritzel 48 des Federrads 38 kämmt mit dem Anschlagrad 32. Dieses weist eine koaxiale, stirnseitige Aussparung 42 auf. Die becherförmige Aussparung 42 nimmt mit Hilfe einer Welle 44 einen Schleppring 46 und den gehäuseseitigen Endanschlag 34 auf. Die Funktion des Schlepprings 46 wird nachfolgend erklärt.

Nach einer nicht vorgespannten, nicht dargestellten Variante kann das Ritzel des Anschlagrads 32 direkt mit der Zahnung des Antrieborgans 12 kämmen. Dies bedingt, dass der Elektromotor 20 vorwärts und rückwärts antreiben kann.

Nach Fig. 1 und 2 hat das Untersetzungsgetriebe 10 eine Drehrichtungswahl. Das Anschlagrad 32 hat ein in Richtung seiner Welle 44 verschiebbares Schaltritzel 50 und ein in Richtung des Ritzels 50 angeformtes Stirnzahnrad 52, welches vorliegend einen etwa hälftig zwischen dem Durchmesser des Ritzels 50 und des Anschlagrads 32 liegenden Durchmesser hat. Dieses angeformte Stirnzahnrad 52 kämmt mit einem Zwischenrad 54 mit einer parallel zur Welle 44 des Anschlagrads 32 laufenden Welle 56 mit einem ebenfalls in Axialrichtung verschiebbaren Schaltritzel 58. Beide unabhängig bezüglich ihrer axialen Lage mit der Zahnung des Antriebsorgans 12 kämmenden Ritzel 50, 58 sind von einer Blattfeder 60 gespannt. Die Ritzel 50, 58 in radialer Richtung überstehende Flansche 62, 64 sind gleitend und unter Vorspannung auf eine Schaltkulisse 66 aufgelegt. Diese hat im wesentlichen die Form des segmentförmigen Antriebsorgans 12. An beiden äusseren Enden weist die Schaltkulisse 66 eine dem Umfang der Flansche 62, 64 entsprechende kreisförmige Aussparung 68, 70 auf. Wenn das Ritzel 50 die Aussparung 68 bzw. das Ritzel 58 die Aussparung 70 erreicht, drückt die Blattfeder 60 das entsprechende Ritzel in eine diesem entsprechende Aussparung im Anschlagrad 32 bzw. im Zwischenrad 54.

Jedem Schaltritzel 50, 58 ist eine Rückstelltaste 72, 74 zugeordnet, die das betreffende Ritzel 50, 58 anheben und in einen nicht angetriebenen Freilauf versetzen kann.

Auf der Montageplatte 14 ist in üblicher Weise ein der Übersichtlichkeit wegen nicht dargestelltes Gehäuse angeordnet, welches die Hohlwelle 18 beidseits frei lässt. In Variation zu Fig. 1, 2 kann die Hohlwelle auch halbkreisförmig ausgebildet und mit einem Befestigungsbügel versehen sein. Weiter kann der Stellantrieb 16 zweiteilig aufgebaut sein, mit einer Schnittstelle zwischen dem Anschlagrad 32 und den Ritzeln 50, 58. Die Hohlwelle 18 mit dem Antriebsorgan 12 bleibt dann auf dem Schaft des Stellglieds, das Untersetzungsgetriebe 10 mit einem Gehäuse kann als Auswechselmodul aufgebracht und befestigt werden.

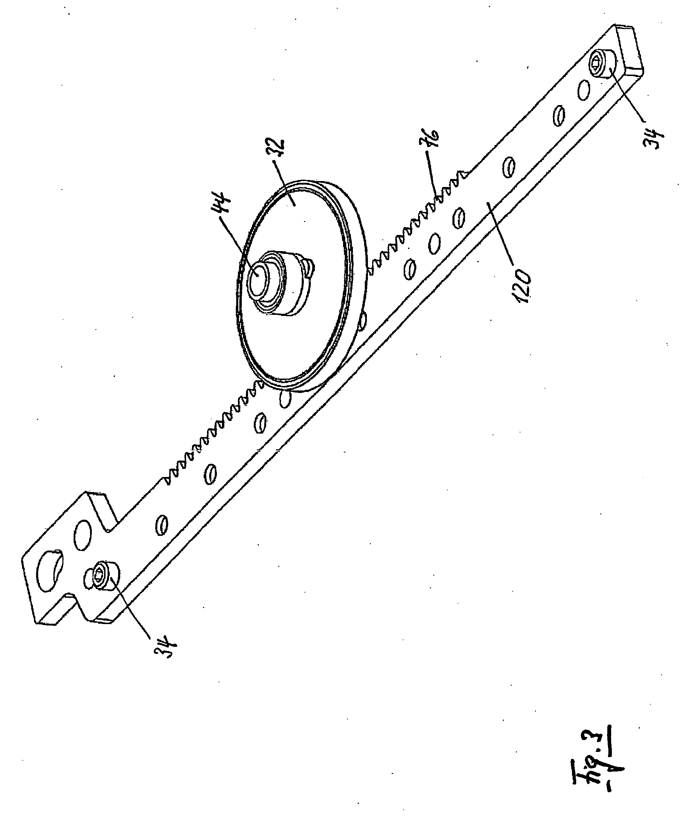

Fig. 3 zeigt eine Zahnstange 120, welche mit einem einstückig mit dem ortsfesten Anschlagrad 32 ausgebildeten, koaxialen Stirnzahnrad 52 kämmt und in einer nicht dargestellten Führung in Längsrichtung frei bewegbar ist. Die Zahnstange 120 hat beidseits stirnseitig angeordnete Endanschläge 34, welche den Drehbereich des Anschlagrades 32 auf wenigstens eine volle Umdrehung beschränken. Die maximal mögliche Anzahl Umdrehungen wird durch das Verhältnis der Länge der Zahnung 76 zum Umfang des kämmenden Stirnzahnrades 52 bestimmt.

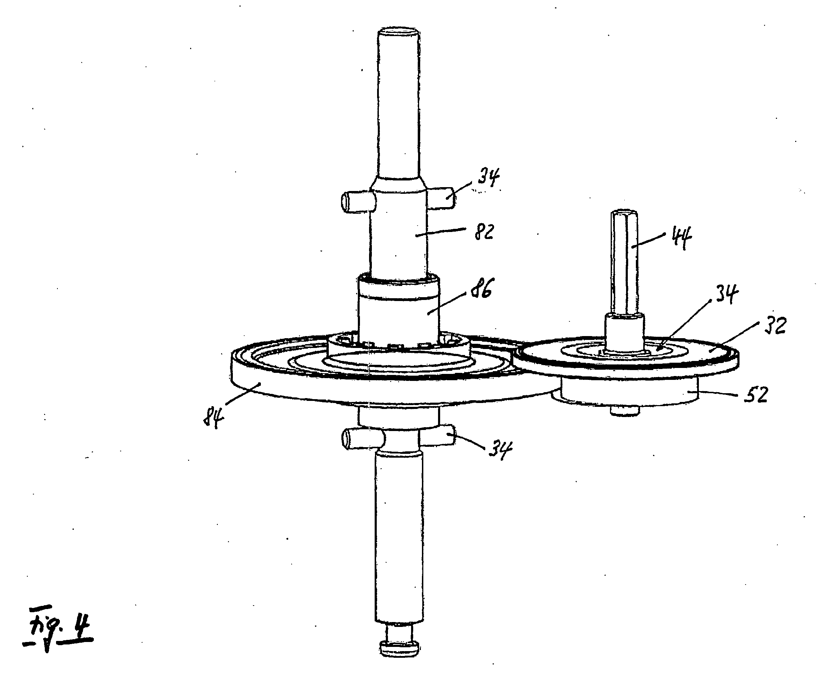

In Fig. 4 ist eine weitere Variante für eine Beschränkung des Drehbereichs des ortsfesten Anschlagrads 32 dargestellt. Ein einstückig mit dem Anschlagrad 32 ausgebildetes, koaxiales Stimzahnrand 52 kämmt mit einem Spindelrad 84 mit einer Führungshülse 86. Das Innengewinde der Führungshülse 86 steht mit einer axial frei verschiebbaren, verdrehgesicherten Spindel 82 in Eingriff. Die Spindel hat beidseits stirnseitig angeordnete Endanschläge 34, welche den Drehbereich der Führungshülse 86 und damit über das Spindelrad 84 des Anschlagrads 32 begrenzen. Die maximal möglichen Umdrehungen des Anschlagrads 32 lassen sich ebenfalls aus den geometrischen Verhältnissen berechnen.

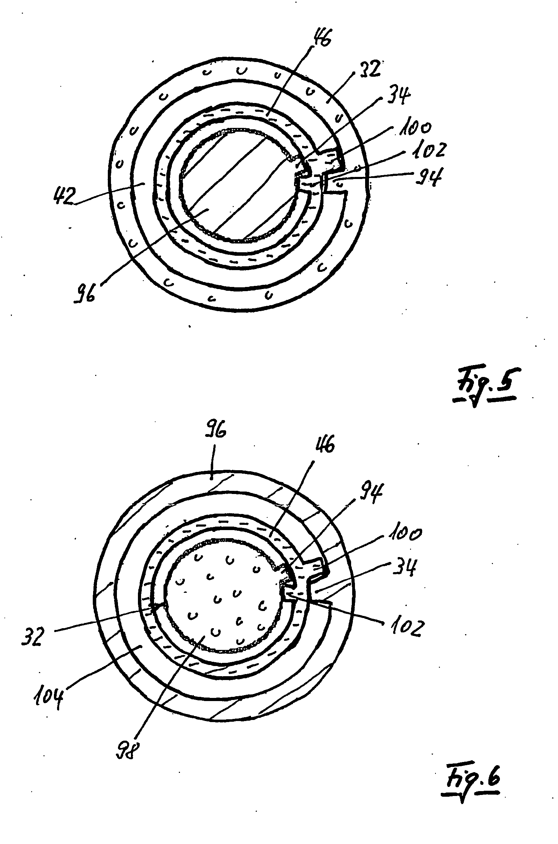

Fig. 5 zeigt den inneren Teil eines Anschlagrads 32 mit einer becherförmigen Aussparung 42. Vom Anschlagrad 32 kragt in radialer Richtung ein Mitnehmernocken 94 in die Aussparung 42 ab. Ein bolzenförmiger Gehäuseteil 96 erstreckt sich koaxial in die Aussparung 42. Der bolzenförmige Gehäuseteil 96 weist einen gehäuseseitigen Endanschlag 34 auf. Koaxial zum bolzenförmigen Gehäuseteil 96 und Anschlagrad 32 ist ein Schleppring 46 angeordnet, welcher mit wenig Spiel auf dem Mitnehmernocken 94 und Endanschlag 34 aufliegt. Der Schleppring 46 weist einen nach aussen abkragenden Übertragungsnocken 100 und einen nach innen abkragenden Übertragungsnocken 102 auf. Das Anschlagsystem gemäss Fig. 5 ist im Gegenuhrzeigersinn vollständig blockiert, im Uhrzeigersinn kann das Anschlagrad 32 nahezu zwei Umdrehungen machen, bis das System blockiert ist.

Fig. 6 zeigt die inverse Situation zu Fig. 5. An einem Stirnrad 98 des Anschlagrads 32 ist ein nach aussen abkragender Mitnehmernocken 94 ausgebildet. Ein rohrförmig ausgebildeter Gehäuseteil 96 weist einen radial nach innen abkragenden Endanschlag 34 auf. Im Innenraum 104 des rohrförmigen Gehäuseteils 96 ist ein koaxial zum Stirnrad 98 des Anschlagrads 32 ein Schleppring 46 mit einem äusseren und einem inneren Übertragungsnocken 100, 102 angeordnet. Das Anschlagrad 32 mit dem Stirnrad 98 kann im Gegenuhrzeigersinn nahezu zwei volle Umdrehungen machen, im Uhrzeigersinn dagegen ist es blockiert.

Sowohl nach der Ausführung nach Fig. 5 als auch nach Fig. 6 können mehrere Schleppringe 46 koaxial ineinander und/oder übereinander angeordnet sein, wenn die Übertragungsnocken 100, 102 entsprechend ausgebildet sind.

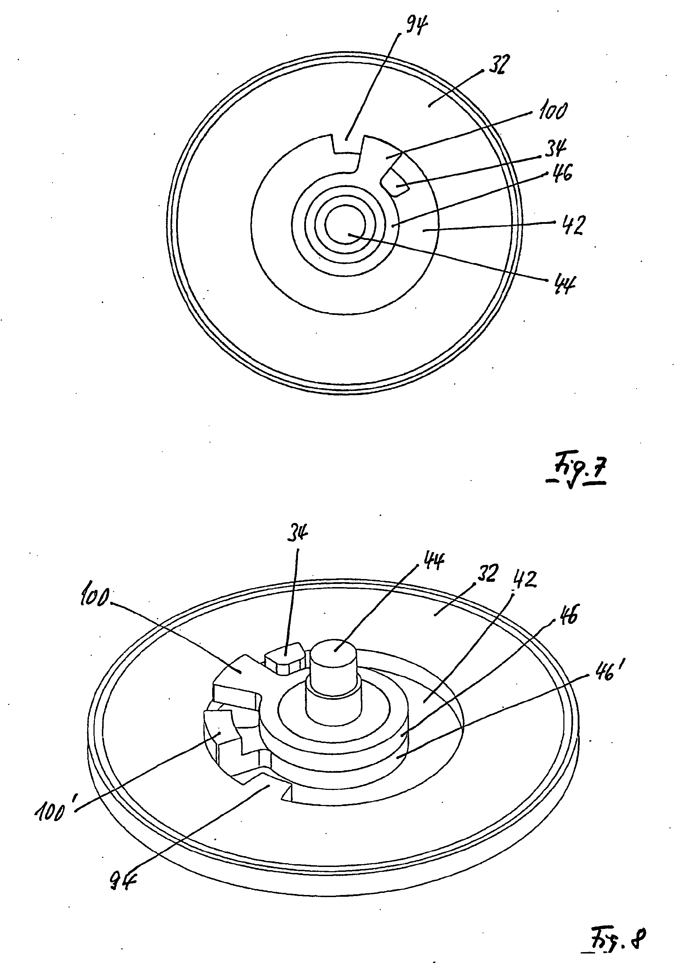

In Fig. 7 ist ein Anschlagrad 32 mit einer koaxialen becherförmigen Aussparung 42 dargestellt. In radialer Richtung kragt ein Mitnehmernocken 94 nach innen ab. Ein gehäuseseitiger, innerer Endanschlag 34 ragt in die Aussparung 42. Ein frei um die Welle 44 des Anschlagrads 32 drehbarer Schleppring 46 weist einen sich bis zur mantelförmigen Wand der Aussparung 42 erstreckender Übertragungsnocken 100 auf, dieser liegt am gehäuseseitigen inneren Endanschlag 34 auf. Das Anschlagrad 32 ist für eine Drehung im Uhrzeigersinn blockiert. Im Gegenuhrzeigersinn kann das Anschlagrad eine nahezu volle Umdrehung machen, bis der über den Endanschlag 34 ihn wegdrehende Mitnehmernocken 94 am Übertragungsnocken 100 anschlägt und diesen für eine weitere fast vollständige Umdrehung mitnimmt. Dann schlägt der sich nach weiter unten erstreckende Übertragungsnocken 100 am gehäusefesten Endanschlag 34 auf, die Bewegung des Anschlagrads 32 im Gegenuhrzeigersinn ist beendet.

Fig. 8 unterscheidet sich von Fig. 7 dadurch, dass zwei übereinander angeordnete koaxiale Schleppringe 46, 46' ausgebildet sind. Jeder der beiden Schleppringe 46, 46' hat einen nach aussen abkragenden Übertragungsnocken 100, 100'. Eine Drehung des Anschlagrads 32 im Uhrzeigersinn ist blockiert. Bei einer Drehung im Gegenuhrzeigersinn kann nicht nur der Mitnehmernocken 94 des Anschlagrads 32 sondern auch der Übertragungsnocken 100' des Schlepprings 46' über den gehäusefesten inneren Endanschlag 34 hinweg geführt werden. Nach der fast vollständigen ersten Umdrehung des Anschlagrads 32 in Gegenuhrzeigersinn wird vorerst der nach oben abgewinkelte Übertragungsnocken 100', bei der nächsten fast vollständigen Umdrehung auch der Übertragungsnocken 100 des zweiten Schlepprings 46, mitgenommen. Im Folgenden werden auch mehrere Schleppringe nur mit 46 bezeichnet, ebenso mehrere Übertragungsnocken nur mit 100.

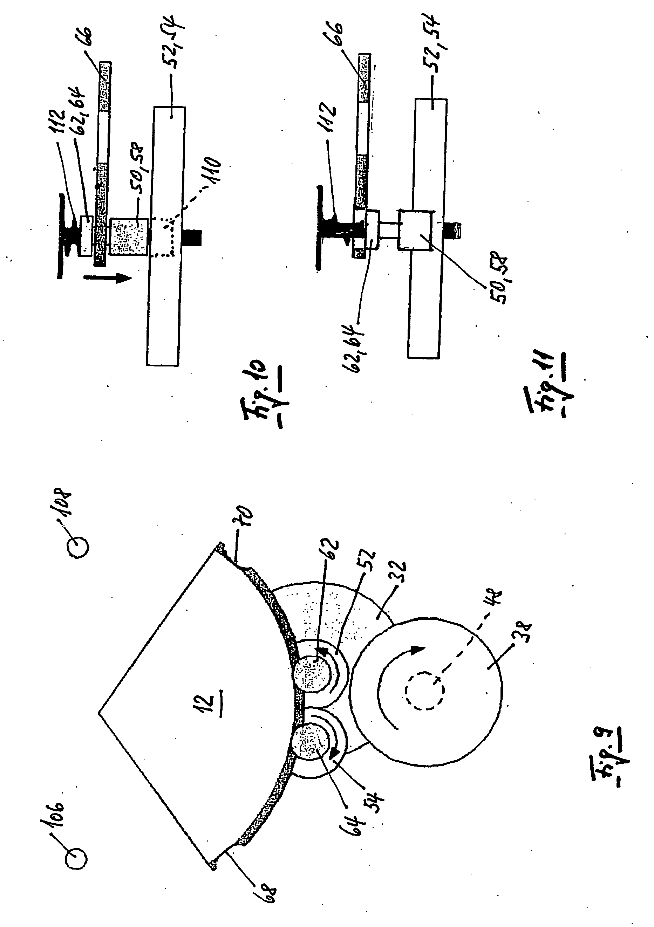

Anhand eines als Zahnsegment ausgebildeten Antriebsorgans 12 wird anhand der Fig. 9 bis 11 das Grundprinzip der Drehrichtungsumkehr erklärt. Die beiden nach dem Stand der Technik üblichen Endanschläge 106, 108 bleiben ohne Funktion. Wenigstens ein gehäuseseitiger innerer Endanschlag 34 (Fig. 3 bis 8 und 13) im Bereich des Anschlagrads 32 übernimmt deren Funktion in vorteilhafter Weise. Das vom Ritzel 48 des Federrads 38 angetriebene Anschlagrad 32 treibt über ein einstückig mit ihm ausgebildetes Stirnzahnrad 52 ein exakt gleich grosses Zwischenzahnrad 54 in entgegengesetzter Richtung an. Das Anschlagrad 32 und das Zwischenrad 54 haben je ein in Axialrichtung höhenverstellbares Schaltritzel 50, 58, beide sind von einem überstehenden Flansch 62, 64 verdeckt. Die beiden Schaltritzel 50, 58 kämmen mit der Zahnung 76 (Fig. 1, 2) des segmentförmigen Antriebsorgans 12, unabhängig von der axialen Lage. In den beiden Endlagen des Antriebsorgans 12 mit je einer den Flanschen 62, 64 entsprechenden Aussparung 68, 70 kann ein Schaltritzel 50, 58 mit dem Stirnzahnrad 52 des Anschlagrads 32 oder mit dem Zwischenrad 54 mit einem Formschluss verrastet werden. Je nachdem, ob das eine oder andere Schaltritzel 50, 58 verrastet, wird die Drehrichtung für alle Arbeitsgänge festgelegt. Das Öffnen beispielsweise einer Klappe eines Belüftungssystems erfolgt über den Elektromotor 20(Fig. 1, 2), das Schliessen mittels Federkraft. In der Regel erfolgt die Drehrichtungseinstellung nur einmal.

Fig. 10 zeigt ein von einem Stirnzahnrad 52 eines Anschlagrads 32 oder einem Zwischenrad 54 entkoppeltes Schaltritzel 50, 58. Das Stirnzahnrad 52 und das Zwischenrad 54 weisen eine dem Querschnitt eines Schaltritzels 50, 58 entsprechende blind endende Aussparung 110 auf. Eine Feder, meist eine Blattfeder, vorliegend jedoch je eine schraubenlinienförmige Druckfeder 112, drückt den Flansch 62, 64 der Schaltritzel 50, 58 auf eine Schaltkulisse 66, was mit einem Pfeil angedeutet ist. Wird das segmentförmige Antriebsorgan 12 in eine Endposition gebracht, d. h. eine kreisförmige Aussparung 68 oder 70 mit dem betreffenden Schaltritzel 50 oder 58 erreicht, drückt die schraubenlinienförmige Druckfeder 112 das betreffende Ritzel 50 oder 58 in die einen Formschluss bewirkende Aussparung 110. Beim Wegschwenken des Antriebsorgans 12 von der Endposition bleibt der Flansch 62 oder 64 unterhalb der Schaltkulisse 66 und fixiert damit das Schaltritzel 50 oder 58 bezüglich der axialen Lage.

Das Entrasten eines Schaltritzels 50 oder 58 erfolgt ebenfalls in der erwähnten Endposition des Antriebsorgans 12. Das Anheben erfolgt gegen den Widerstand der schraubenlinienförmigen Druckfeder 112 und muss allenfalls unter Ausnützung der Hebelwirkung erfolgen.

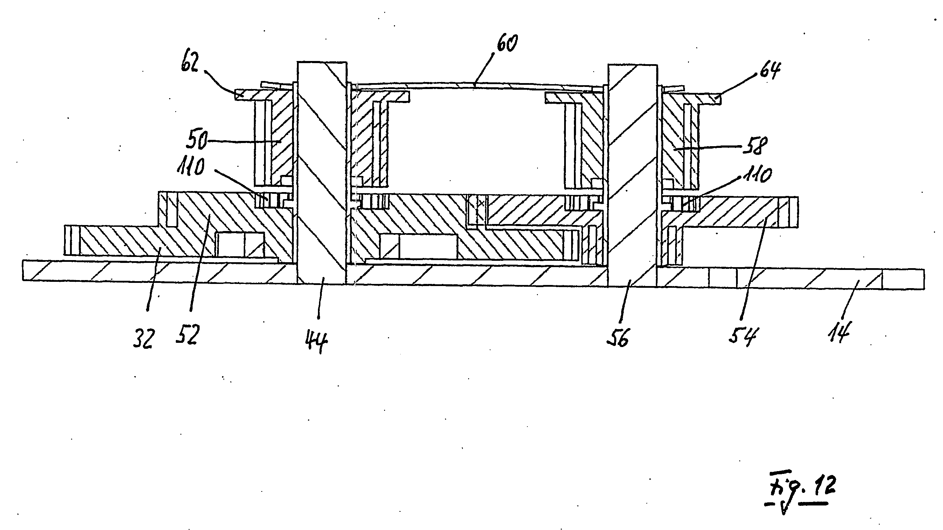

In Fig. 12 ist der Umschaltmechanismus für eine Drehrichtungswahl dargestellt. Auf einer Montageplatte 14 oder in einem Gehäuse sind u. a. die Welle 44 des das Anschlagrads 32 und die Welle 56 des Zwischenrads 54 parallel verankert.

Das Stirnzahnrad 52 des Anschlagrads 32 kämmt mit dem Zwischenrad 54 gleichen Durchmessers. Die beiden Räder laufen mit gleicher Drehgeschwindigkeit in entgegengesetzter Richtung. Die Welle 44 führt auch das in Längsrichtung verschiebbare Schaltritzel 50, die Welle 56 entsprechend das Schaltritzel 58. Gemäss der Position von Fig. 12 liegen beide Schaltritzel 50, 58 über einen Flansch 62, 64 auf einer nicht eingezeichneten Schaltkulisse 66 (Fig. 10) auf. Die Schaltritzel 50, 58 werden mit Hilfe einer Blattfeder 60 auf der Schaltkulisse 66 aufliegend geführt, beim Erreichen einer Endposition des Antriebsorgans 12 wird das entsprechende Schaltritzel 50 oder 58 in eine der beiden Aussparungen 110 gedrückt und so ein Formschluss hergestellt, der das Bewegen des Antriebsorgans 12 in der einen oder anderen Richtung bewirkt.

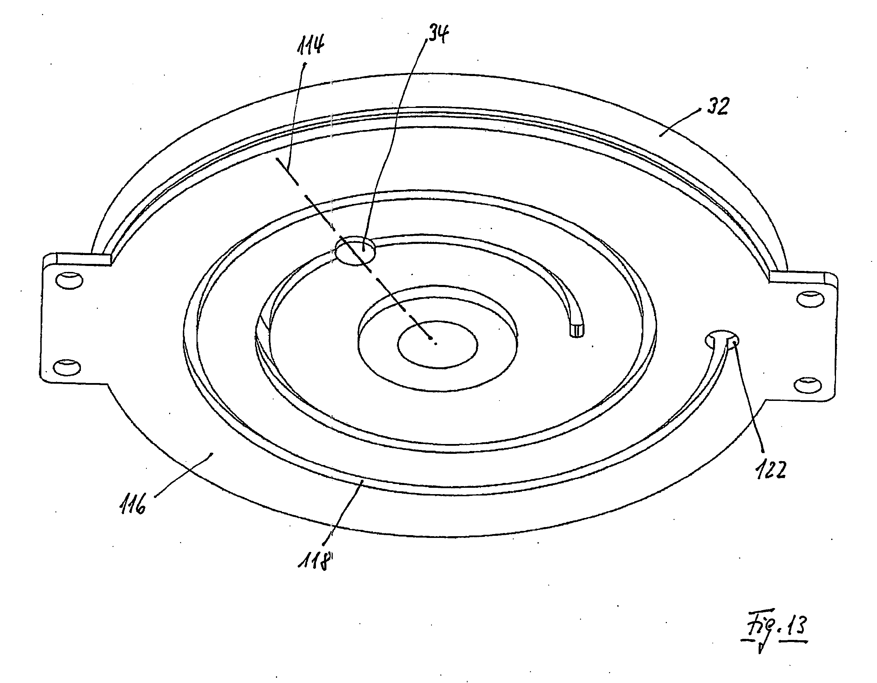

Fig. 13 zeigt eine weitere Variante für die Begrenzung der Anzahl Umdrehungen des ortsfesten Anschlagrads 32. Mit wenig Spiel ist eine fest montierte Anschlagkulisse 116 an das Anschlagrad 32 angeordnet, welche eine spiralförmige Führung 118 für einen bolzenförmigen Endanschlag 34 des Anschlagrads 32 aufweist. Dieser Bolzen wird beim Drehen des Anschlagrads 32 entlang einer gestrichelt angedeuteten Radialführung 114 geführt. Bei der Montage ist der Endanschlag 34 durch eine entsprechende Öffnung 122 in die spiralförmige Führung 118 einbringbar. Diese Öffnung 122 kann verschlossen werden und bildet die eine Aufschlagfläche für den Endanschlag 34. Die andere Aufschlagfläche wird durch das innere Ende der spiralförmigen Führung 118 gebildet. Die maximal mögliche Anzahl Umdrehungen des Anschlagrads 32 wird durch die Anzahl Windungen der spiralförmigen Führung 118 festgelegt.

## Patentansprüche

1. Stellantrieb (16) mit einem Reduktionsgetriebe (10), welcher über ein Antriebsorgan (12), insbesondere in Form eines Antriebssegments, eines Linearantriebs oder einer Antriebsspindel, auf ein Stellglied zur Regelung eines Gas- oder Flüssigkeitsstroms einwirkt, insbesondere auf dem Gebiet HLK, Brand- und Rauchschutz, wobei die Stellbewegung durch Endanschläge (34) begrenzt ist
**dadurch gekennzeichnet, dass**
wenigstens ein gehäuseseitiger innerer Endanschlag (34) die Rotationsfreiheit eines mit dem Antriebsorgan (12) in formschlüssigem Eingriff stehenden Anschlagrads (32) auf mehr als eine volle Umdrehung begrenzt.

2. Stellantrieb (16) nach Anspruch 1, **dadurch gekennzeichnet, dass** in einer stirnseitigen Aussparung (42) des Anschlagrads (32) wenigstens ein frei drehbarer koaxialer Schleppring (46) mit wenigstens je einem Übertragungsnocken (100, 102) in radialer und/oder axialer Richtung angeordnet ist.

3. Stellantrieb (16) nach Anspruch 2, **dadurch gekennzeichnet, dass** die koaxiale Aussparung (42) des Anschlagrads (32) einen radial nach innen abkragenden Mitnehmernocken (94), einen darin angeordneten Schleppring (46) mit einem radial nach aussen abkragenden Übertragungsnocken (100) für den Mitnehmernocken (94) und einen aussenseitig des Schlepprings (46) angeordnetem gehäuseseitigem Endanschlag (34) für den Übertragungsnocken (100), aufweist, wobei der Mitnehmernocken (94) über den Endanschlag (34) hinweg drehbar ist.

4. Stellantrieb (16) nach Anspruch 2, **dadurch gekennzeichnet, dass** ein rohrförmiger Gehäuseteil (96) einen Innenraum (104) mit einem radial nach innen abkragenden Endanschlag (34) für den äusseren Übertragungsnocken (100) eines einzigen Schlepprings oder des äussersten von mehreren Schleppringen (46), wenigstens einen Schleppring (46) mit je einem radial nach aussen und innen abkragenden Übertragungsnocken (100, 102) und ein koaxiales Stirnrad (52) des Anschlagrads (32) mit einem radial nach aussen abkragenden Mitnehmernocken (94) für den inneren Übertragungsnocken (102) eines einzigen Schlepprings oder des innersten von mehreren Schleppringen (46) aufweist, wobei bei mehreren Schleppringen (46) der jeweils äussere Übertragungsnocken (100) auf den jeweils inneren Übertragungsnocken (102) des nächstgrösseren Schlepprings (46) aufschlägt.

5. Stellantrieb (16) nach Anspruch 2, **dadurch gekennzeichnet, dass** die koaxiale Aussparung (42) des Anschlagrads (32) einen radial nach innen abkragenden Mitnehmernocken (94), wenigstens einen in der Aussparung (42) angeordneten Schleppring (46) mit je einem radial nach aussen und innen abkragenden Übertragungsnocken (100, 102) und einen koaxialen rohr- oder bolzenförmigen Gehäuseteil (96) mit einem nach aussen abkragenden Endanschlag (34) für den inneren Übertragungsnocken (102) eines einzigen Schlepprings oder des innersten von mehreren Schleppringen (46) aufweist, wobei bei mehreren Schleppringen (46) der jeweils innere Übertragungsnocken (102) auf den jeweils äusseren Übertragungsnocken (100) des nächst kleineren Schlepprings aufschlägt.

6. Stellantrieb (16) nach Anspruch 1, **dadurch gekennzeichnet, dass** das Anschlagrad (32) eine Führung (114) für die freie radiale Verschiebung eines Endanschlags (34) und eine stirnseitig befestigte Anschlagkulisse (116) mit einer spiralförmigen Führung (118) für den Endanschlag (34) aufweist.

7. Stellantrieb (16) nach Anspruch 1, **dadurch gekennzeichnet, dass** das Anschlagrad (32) mit einer frei laufenden Zahnstange (120) kämmt, welche beidseits einen Endanschlag (34) aufweist, die die Anzahl Umdrehungen des Anschlagrads (32) begrenzen.

8. Stellantrieb nach Anspruch 1, **dadurch gekennzeichnet, dass** das Anschlagrad (32) mit einem frei drehbaren Spindelrad (84) kämmt, welches über eine Führungshülse (86) mit Innengewinde auf eine längsverschiebbare, drehgesicherte Spindel (82) einwirkt, welche beidseits einen Endanschlag (34) aufweist, die die Anzahl Umdrehungen des Anschlagrads (32) begrenzen.

9. Stellantrieb (16) nach einem der Ansprüche 1 bis 8, **dadurch gekennzeichnet, dass** das Anschlagrad (32) mit dem Ritzel (48) eines vorspannbaren Federrads (38) kämmt.

10. Stellantrieb (16) nach einem der Ansprüche 1 bis 9, **dadurch gekennzeichnet, dass** das Gehäuse mit dem Reduktionsgetriebe (10) modular aufgebaut und mit dem Anschlagrad (32) als Schnittstelle zum Antriebsorgan (12) auswechselbar ist, vorzugsweise als aufsteckbares Modul mit Einschnappvorrichtung.

11. Stellantrieb (16) nach einem der Ansprüche 1 bis 10, **dadurch gekennzeichnet, dass** im Bereich der Schnittstelle zwischen dem Anschlagrad (32) und dem Antriebsorgan (12) eine Umschaltvorrichtung zum Ändern der Bewegungsrichtung des Antriebsorgans (12) angeordnet ist.

12. Stellantrieb (16) nach einem der Ansprüche 1 bis 11, **dadurch gekennzeichnet, dass** das Reduktionsgetriebe (10) vorgespannt ist und dass in einer Umschaltvorrichtung zum Ändern der Bewegungsrichtung des Antriebsorgans (12) zwei in Gegenrichtung antreibbare Stirnzahnräder (52, 54) mit gleichem Durchmesser je ein in deren Axialrichtung verschiebbares Schaltritzel (50, 58) haben, die in jeder axialen Position mit dem Antriebsorgan (12) in formschlüssigen Eingriff stehen, wobei jeweils eines der beiden Schaltritzel (50, 58) mit einem der beiden Stirnzahnräder (52, 54) gleichen Durchmessers drehmomentfest verrastbar ist.

13. Stellantrieb (16) nach Anspruch 12, **dadurch gekennzeichnet, dass** die beiden Stirnzahnräder (52, 54) gleichen Durchmessers eine koaxiale Aussparung (110) mit der Querschnittsform der Schaltritzel (50, 58) aufweisen.

14. Stellantrieb (16) nach Anspruch 12 oder 13, **dadurch gekennzeichnet, dass** die beiden Schaltritzel (50, 58) in axialer Richtung vorgespannt sind, vorzugsweise mit einer Blattfeder (60) oder einer schraubenlinienförmigen Druckfeder (112).

15. Stellantrieb (16) nach einem der Ansprüche 12 bis 14, **dadurch gekennzeichnet, dass** eine entlang der Zahnung (76) des Antriebsorgans (12) verlaufende Schaltkulisse (66) die beiden Schaltritzel (50, 58) führt.

## Claims

1. Actuator (16) with a reduction gear (10) which acts by way of a drive element (12), in particular in the form of a drive segment, a linear drive or a drive spindle, on an actuator to control a gas or liquid flow, in particular in the field of HVAC, fire and smoke protection, wherein the actuator movement is limited by end stops (34),
**characterised in that**
at least one inner end stop (34) on the housing side limits the rotational freedom of a stop wheel (32) that is in form-fit engagement with the drive element (12) to more than one full revolution.

2. Actuator (16) according to claim 1, **characterised in that** in a face-side recess (42) of the stop wheel (32) is arranged at least one freely rotatable, coaxial slip ring (46) with at least one transfer cam (100, 102) in the radial and/or axial direction.

3. Actuator (16) according to claim 2, **characterised in that** the coaxial recess (42) of the stop wheel (32) has a carrier cam (94) protruding radially inwards, arranged therein a slip ring (46) with a transfer cam (100) protruding radially outwards for the carrier cam (94), and an end stop (34) arranged on the outside of the slip ring (46) for the transfer cam (100), wherein the carrier cam (94) can be rotated beyond the end stop (34).

4. Actuator (16) according to claim 2, **characterised in that** a tubular housing part (96) comprises an inner chamber (104) with end stop (34) protruding radially inward for the outer transfer cam (100) of a single slip ring or the outermost of several slip rings (46), at least one slip ring (46) with one radially outwardly and one radially inwardly protruding transfer cam (100, 102), and a coaxial spur gear (52) of the stop wheel (32) with a carrier cam (94) protruding radially outward for the inner transfer cam (102) of a single slip ring or the innermost of several slip rings (46), wherein for several slip rings (46) the outer transfer cam (100) in each case impacts on the inner transfer cam (102) of the next largest slip ring (46).

5. Actuator (16) according to claim 2, **characterised in that** the coaxial recess (42) of the stop wheel (32) comprises a carrier cam (94) protruding radially inward, at least one slip ring (46) arranged in the recess (42) with one radially outwardly and one radially inwardly protruding transfer cam (100, 102), and a coaxial tubular or bolt-like housing part (96) with an end stop (34) protruding radially outward for the inner transfer cam (102) of a single slip ring or the innermost of several slip rings (46), wherein for several slip rings (46) the inner transfer cam (102) in each case impacts on the outer transfer cam (100) of the next smallest slip ring (46).

6. Actuator (16) according to claim 1, **characterised in that** the stop wheel (32) comprises a guide (114) for the free radial shift of an end stop (34) and a stop gate (116) attached to the face end with a spiral guide (118) for the end stop (34).

7. Actuator (16) according to claim 1, **characterised in that** the stop wheel (32) intermeshes with a freely running toothed rod (12) which has an end stop (34) on both ends which limit the number of revolutions of the stop wheel (32).

8. Actuator according to claim 1, **characterised in that** the stop wheel (32) intermeshes with a freely rotatable spindle wheel (84) which acts by way of a guide sleeve (86) with internal thread on a longitudinally displaceable, rotationally fixed spindle (82) which has an end stop (34) on both ends which limit the number of revolutions of the stop wheel (32).

9. Actuator (16) according to any of claims 1 to 8, **characterised in that** the stop wheel (32) intermeshes with the pinion (48) of a pretensionable spring wheel (38).

10. Actuator (16) according to any of claims 1 to 9, **characterised in that** the housing with the reduction gear (10) is modular in structure and interchangeable with the stop wheel (32) as an interface to the drive element (12), preferably as a plug-in module with snap-lock fitting.

11. Actuator (16) according to any of claims 1 to 10, **characterised in that** in the area of the interface between the stop wheel (32) and the drive element (12), a switch-over device is arranged to change the movement direction of the drive element (12).

12. Actuator (16) according to any of claims 1 to 11, **characterised in that** the reduction gear (10) is pretensioned and that in a switch-over device to change the movement direction of the drive element (12), two spur gears (52, 54) of the same diameter, which can be driven in opposite directions, each have a shift pinion (50, 58) which can be shifted in their axial directions and in each axial position stand in form-fit engagement with the drive element (12), wherein each of the two shift pinions (50, 58) can be engaged torque-resistant with one of the two spur gears (52, 54) of the same diameter.

13. Actuator (16) according to claim 12, **characterised in that** the two spur gears (52, 54) of the same diameter have a coaxial recess (110) with the cross-sectional shape of the shift pinion (50, 58).

14. Actuator (16) according to claim 12 or 13, **characterised in that** the two shift pinions (50, 58) are pretensioned in the axial direction, preferably with a leaf spring (60) or a helical compression spring (112).

15. Actuator (16) according to any of claims 12 to 14, **characterised in that** a shift gate (66) running along the toothing (76) of the drive element (12) guides the two shift pinions (50, 58).

## Revendications

1. Mécanisme (16) à engrenage réducteur (10) pour la commande d'un actionneur de régulation d'un flux de gaz ou de liquide, par l'intermédiaire d'un organe de commande (12) réalisé en particulier sous la forme d'une lame, d'une broche ou d'un dispositif linéaire, en particulier dans le domaine du chauffage, de la ventilation et de la climatisation ainsi que dans celui de la détection de fumées et d'incendie, dans lequel le mouvement de réglage est limité par des butées de fin de course (34) et qui est **caractérisé par** la présence d'au moins une butée intérieure (34), située du côté du boîtier, qui limite à plus d'un tour complet la liberté de rotation d'une roue d'arrêt (32) en prise avec l'organe de commande (12).

2. Mécanisme selon la revendication 1, **caractérisé en ce que** dans un évidement frontal (42) de la roue d'arrêt (32), il est disposé au moins une bague d'entraînement coaxiale (46) libre en rotation, qui est dotée d'au moins un mentonnet de transmission en direction radiale et/ou axiale (100, 102).

3. Mécanisme selon la revendication 2, **caractérisé en ce que** ledit évidement coaxial (42) de la roue d'arrêt (32) présente un mentonnet d'entraînement (94) faisant saillie radialement vers l'intérieur de l'évidement, une bague d'entraînement (46) comportant un mentonnet de transmission (100) faisant saillie radialement vers l'extérieur pour coopérer avec ledit mentonnet d'entraînement (94), et une butée de fin de course (34) pour le mentonnet de transmission (100), qui est disposée à l'extérieur de la bague d'entraînement (46) du côté du boîtier, ledit mentonnet d'entraînement (94) pouvant tourner au-delà de ladite butée (34).

4. Mécanisme suivant la revendication 2, **caractérisé par** un élément de boîtier tubulaire (96) ménageant un espace intérieur (104) dans lequel se trouvent une butée de fin de course (34) faisant saillie radialement vers l'intérieur pour buter contre le mentonnet de transmission (100) prévu à l'extérieur d'une bague d'entraînement unique (46) ou de celle d'une pluralité de bagues qui est la dernière vers l'extérieur, au moins une bague d'entraînement (46) portant deux mentonnets de transmission (100, 102) en saillie radialement respectivement vers l'extérieur et vers l'intérieur, et une roue dentée coaxiale (52) de la roue d'arrêt (32) pourvue d'un mentonnet d'entraînement (94) faisant saillie radialement vers l'extérieur pour entraîner le mentonnet de transmission intérieur (102) d'une bague d'entraînement unique (46) ou de celle d'une pluralité de bagues qui est le plus à l'intérieur, de telle sorte que, dans le cas d'une pluralité de bagues d'entraînement (46), chaque mentonnet de transmission extérieur (100) d'une bague d'entraînement vient en butée sur le mentonnet de transmission intérieur (102) de la bague d'entraînement plus grande suivante (46).

5. Mécanisme selon la revendication 2, **caractérisé en ce que** dans l'évidement coaxial (42) de la roue d'arrêt (32), on trouve un mentonnet d'entraînement (94) faisant saillie radialement vers l'intérieur, au moins une bague d'entraînement (46) portant deux mentonnets de transmission (100, 102) faisant saillie radialement l'un vers l'extérieur et l'autre vers l'intérieur, e t un élément de boîtier tubulaire coaxial (97), à section creuse ou en couronne, qui est doté d'une butée de fin de course (34) destinée à buter contre le mentonnet de transmission intérieur (102) d'une bague d'entraînement unique (46) ou de celle d'une pluralité de bagues d'entraînement qui est le plus intérieure, de telle sorte que, dans le cas d'une pluralité de bagues d'entraînement, chaque mentonnet de transmission intérieur (102) d'une bague d'entraînement vient buter sur le mentonnet de transmission extérieur (100) de la bague d'entraînement plus petite suivante.

6. Mécanisme suivant la revendication 1, **caractérisé en ce que** la roue d'arrêt (32) comporte un guide (114) de libre déplacement radial d'une butée de fin de course (34) ainsi qu'une coulisse frontale d'arrêt (116) à creusure (112) de guidage hélicoïdal de ladite butée.

7. Mécanisme selon la revendication 1, **caractérisé en ce que** la roue d'arrêt (32) engrène avec une crémaillère (120) à coulissement libre équipée d'une butée de fin de course (34) à chaque extrémité pour limiter le nombre de tours de la roue d'arrêt (32).

8. Mécanisme suivant la revendication 1, **caractérisé en ce que** la roue d'arrêt (32) engrène avec une roue de broche (84), libre en rotation, qui agit par une douille de guidage à filetage intérieur (86) sur une broche (82) qui est mobile longitudinalement et bloquée en rotation et qui est équipée à chaque extrémité d'une butée de fin de course (34) de manière à limiter le nombre de tours de la roue d'arrêt (32).

9. Mécanisme selon l'une quelconque des revendications 1 à 8, **caractérisé en ce que** la roue d'arrêt (32) engrène avec le pignon (48) d'une roue à ressort (38) sous pré-tension.

10. Mécanisme selon l'une quelconque des revendications 1 à 9, **caractérisé en ce que** le boîtier comportant l'engrenage réducteur (10) est réalisé à structure modulaire, avec possibilité de démontage de la roue d'arrêt (32) séparément de l'organe de commande (12), le montage étant de préférence à encliquetage.

11. Mécanisme selon l'une quelconque des revendications 1 à 10, **caractérisé en ce qu'**il est prévu, entre la roue d'arrêt (32) et l'organe de commande (12), un dispositif de commutation permettant d'inverser le sens de déplacement de l'organe de commande (12).

12. Mécanisme selon l'une quelconque des revendications 1 à 11, à engrenage réducteur (10) précontraint, **caractérisé par** un dispositif commutateur d'inversion du sens de déplacement de l'organe de commande (12) qui comporte deux roues à denture frontale (52, 54) présentant le même diamètre et tournant en sens opposé, qui sont associées chacune à un pignon de commutation (50, 58) mobile axialement par rapport à la roue correspondante, lesdits pignons venant en permanence en prise avec l'organe de commande (12), de telle sorte qu'il y a toujours enclenchement et couplage en rotation entre l'un des deux pignons de commande (50, 58) et l'une des deux roues dentées de même diamètre (52, 54).

13. Mécanisme selon la revendication 12, **caractérisé en ce que** les deux roues à denture frontale de même diamètre (52, 54) présentent un évidement axial (110) de section correspondant à celle des pignons de commutation (50, 58).

14. Mécanisme selon la revendication 12 ou 13, **caractérisé en ce que** les deux pignons de commutation (50, 58) sont précontraints en direction axiale, de préférence au moyen d'un 20 ressort à lames (60) ou d'un ressort de pression hélicoïdal (112)

15. Mécanisme selon l'une quelconque des revendications 12 à 14, **caractérisé par** une coulisse de commutation (66) qui se déplace sur la denture (76) de l'organe de commande (12) en guidage des deux pignons de commutation (50, 58).
